# EUROPÄISCHE PATENTSCHRIFT

(11) **EP 1 194 964 B1**
(45) Veröffentlichungstag und Bekanntmachung des Hinweises auf die Patenterteilung: **05.03.2003**
(21) Anmeldenummer: 00927082.8
(22) Anmeldetag: 27.04.2000
(51) Int. Cl.: H01M 4/24, B22F 9/06

(54) **GEMISCH AUS METALL- UND/ODER LEGIERUNGSTEILCHEN UND EINEM FLÜSSIGEN ELEKTROLYTISCHEN MEDIUM SOWIE VERFAHREN ZUR HERSTELLUNG DESSELBEN**
MIXTURE CONSISTING OF METAL PARTICLES AND/OR ALLOY PARTICLES AND OF A LIQUID ELECTROLYTIC MEDIUM AND METHOD FOR PRODUCING THE SAME
MELANGE DE PARTICULES DE METAL ET/OU D'ALLIAGE ET D'UNE SUBSTANCE ELECTROLYTIQUE LIQUIDE ET PROCEDE PERMETTANT DE LE PREPARER

(30) Priorität: 30.06.1999 DE 19930214
(43) Veröffentlichungstag der Anmeldung: 10.04.2002
(73) Patentinhaber: Grillo-Werke AG, D-47169 Duisburg (DE)
(72) Erfinder: GLAESER, Wolfgang, D-38640 Goslar (DE)
(74) Vertreter: Werner, Hans-Karsten, Dr.Dipl.-Chem.
(86) Internationale Anmeldenummer: EP0003798
(87) Internationale Veröffentlichungsnummer: WO01003209

(56) Entgegenhaltungen:
- DE-A- 3 238 240
- US-A- 4 606 869
- PATENT ABSTRACTS OF JAPAN vol. 1995, no. 09, 31. Oktober 1995 (1995-10-31) -& JP 07 161356 A (FUJI ELELCTROCHEM CO LTD), 23. Juni 1995 (1995-06-23)
- PATENT ABSTRACTS OF JAPAN vol. 008, no. 268 (E-283), 7. Dezember 1984 (1984-12-07) -& JP 59 139558 A (TOSHIBA DENCHI KK), 10. August 1984 (1984-08-10)

## Beschreibung

Gegenstand der vorliegenden Erfindung ist ein Gemisch aus Metall- und/oder Legierungsteilchen und einem flüssigen elektrolytischen Medium sowie Verfahren zur Herstellung desselben.

Derartige Gemische sind bekannt und werden zu verschiedenen Zwecken verwendet, wobei besonders bedeutungsvoll solche Gemische sind, bei denen die Metall- und/oder Legierungsteilchen sich in dem flüssigen elektrolytischen Medium auflösen und dabei elektrischen Strom abgeben können. Es handelt sich somit insbesondere um Gemische von Metall- oder Legierungsteilchen, bei denen die Teilchen sich in einer Säure oder Lauge auflösen können. Diese chemischen Reaktionen werden in erheblichem Umfang verwertet zur Herstellung von elektrischem Strom, beispielsweise in Batterien und Akkumulatoren, d.h. wiederaufladbaren Batterien.

Ein sehr häufig eingesetztes Gemisch besteht aus Zinkteilchen oder Teilchen einer Zinklegierung und Lösungen von Alkali als flüssigem elektrolytischen Medium. Diese Gemische werden beispielsweise eingesetzt zusammen mit Gemischen von Mangandioxid mit Anteilen eines flüssigen elektrolytischen Mediums, wobei die beiden Gemische meist durch einen Separator voneinander getrennt sind. Die Teilchen aus Zink oder Zinklegierungen werden nach verschiedenen bekannten Methoden aus flüssigem Zink oder flüssigen Zinklegierungen hergestellt, beispielsweise durch Verdüsen oder Granulieren. Je nach Verfahrensbedingungen lassen sich die Korngrößen, die Korngrößenverteilung und die äußeren Formen der Teilchen einstellen, wobei häufig Siebfraktionen von Überkorn und Unterkorn abgetrennt werden.

Aus der WO 98/50969 ist bekannt, Teilchen aus Zink oder Zinklegierungen, denen jedoch kein Quecksilber zugemischt wurde, für elektrochemische Zellen einzusetzen, wobei die Zinkteilchen möglichst gleichmäßig geformt sein sollen.

Es wird als nachteilig angesehen, dass die bisher in derartigen elektrochemischen Zellen eingesetzten Zinkteilchen unregelmäßig geformt sind und dies zu einem schlechteren elektrischen Kontakt zwischen den Zinkteilchen führt. Um diesen Nachteil zu vermindern, hat man sich in der Vergangenheit bemüht, die Konzentration der Zinkteilchen in der Anode zu erhöhen. Dies vermindert jedoch den zur Verfügung stehenden Raum für den Elektrolyten und die Reaktionsprodukte.

Auf den Seiten 1 und 2 dieses Dokumentes sind sowohl der bisherige Stand der Technik als auch die bisher beschrittenen Wege zur Verbesserung der Qualität zusammengestellt.

Gemäß WO 98/50969 soll die Qualität verbessert werden durch Verwendung von gleichmäßig geformten Zinkteilchen mit gleicher Größe. Vorzugsweise zum Einsatz kommen gleichförmige Plättchen, die in mehr oder weniger großen Mengen anderen Zinkpulvern zugemischt werden, so dass sich die Rütteldichte (tap density) vermindert. Durch den Zusatz von ungefähr 10% derartiger Plättchen kann der Zinkgehalt von 69 bis 71% auf 62 bis 64% vermindert werden.

Der Nachteil derartiger Gemische ist, dass es in der Praxis relativ schwierig ist, homogene Gemische aus derartigen Plättchen und sonstigen Zinkpulvern herzustellen, die sich während des Herstellungsprozesses nicht entmischen und dadurch inhomogene Rütteldichte und somit inhomogene Batteriefüllungen zur Folge haben.

Die Erfindung hat sich die Aufgabe gestellt, Gemische aus Metall- und/oder Legierungsteilchen und einem flüssigen elektrolytischen Medium zur Verfügung zu stellen, die leicht reproduzierbar herstellbar sind, nicht zu Entmischung führen und beim Einbau in Batterien und Akkumulatoren optimale Eigenschaften aufweisen bezüglich Leistung, Lebensdauer, Belastbarkeit durch starke Entladung und mechanische Stöße unter gleichzeitiger Vermeidung der Freisetzung von Gasen.

Diese Aufgabe wird jetzt dadurch gelöst, dass die Metall- und/oder Legierungsteilchen ungleichmäßig geformt sind, eine ungleichmäßige Oberfläche aufweisen und eine Schüttdichte unter 33 Gew.-% der spezifischen Dichte des kompakten Metalls und/oder der kompakten Legierung aufweisen und das Volumen des flüssigen Mediums größer ist als es den Zwischenräumen zwischen den Teilchen bei trockener Schüttung entspricht.

Derartige Gemische weisen dann optimale Eigenschaften auf, wenn das Medium durch ein Geliermittel verfestigt ist. Vorzugsweise zum Einsatz kommen Gemische, bei denen die die Metall- und/oder Legierungsteilchen aus Zink und/oder einer Zinklegierung bestehen. Diese Gemische sollen vorzugsweise weniger als 65 Gew.-%, vorzugsweise sogar weniger als 62 Gew.-% Zink und/oder Zinklegierung enthalten.

Für die erfindungsgemäßen Gemische geeignete Metall- und/oder Legierungsteilchen, die eine ungleichmäßige Oberfläche aufweisen und eine Schüttdichte unter 33 Gew.-% der spezifischen Dichte des kompakten Metalls und/oder der kompakten Legierung aufweisen, können beispielsweise hergestellt werden durch ein Granulierverfahren, bei dem spratzige Zinkteilchen entstehen. Spratzige Teilchen entstehen insbesondere beim plötzlichen Entweichen gelöster Gase, bei der Erstarrung von Metallschmelzen und der Bildung eines porösen Gusses. Diese Teilchen weisen eine sehr breite Korngrößenverteilung auf, sie sind ungleichmäßig geformt und besitzen eine ungleichmäßige Oberfläche. Die Oberfläche ist somit bezogen auf die Gewichtseinheit des Metalls relativ groß. Die Teilchen sind dennoch in der Lage, viel direkten elektrischen Kontakt herzustellen. Durch den Einsatz eines Geliermittels im flüssigen elektrolytischen Medium wird die Empfindlichkeit gegen mechanische Stöße deutlich vermindert.

Bezogen auf Zink und Zinklegierungen bedeutet eine Schüttdichte unter 33 Gew.-% der spezifischen Dichte des kompakten Metalls und/oder der kompakten Legierung eine Schüttdichte von ca. 2,3 g/ml. Unter Verwendung des oben beschriebenen spratzigen Granulats ist es möglich, auch Schüttdichten unter 2,3 g/ml herzustellen und damit Batteriefüllungen mit einem Gehalt von weniger als 62 Gew.-% Zink Gemisch herzustellen. Diese Gemische besitzen beispielsweise in alkalischen Zinkbatterien mit einem Separator und Mangandioxid hervorragende Eigenschaften bezüglich Leistung, Lebensdauer, Belastbarkeit durch starke Entladung und mechanische Stöße unter gleichzeitiger Vermeidung der Freisetzung von größeren Mengen an Gasen.

Die Schüttdichte von derartigen Metall- und/oder Legierungsteilchen wird beispielsweise bestimmt gemäß ASTM-B 212. Derartige Gemische besitzen noch ausreichenden direkten Kontakt zwischen nahezu allen Teilchen, weisen aber auch genügend Zwischenräume auf für den Elektrolyten und die Reaktionsprodukte bei der Erzeugung des Stromes.

Wegen des Überschusses an Elektrolyten sind diese Gemische leicht in üblicher Weise dosierbar. Es ist somit möglich, unter Beibehaltung der bisherigen Herstellungsmethoden für Batterien Gemische einzubringen, die weniger Zink und mehr Elektrolyt enthalten, jedoch bezüglich der Eigenschaften der fertigen Batterie Vorteile aufweisen, die bisherige Batterien nicht aufgewiesen haben. Besonders vorteilhaft sind diese Eigenschaften bei Batterien, die konstant hohe Leistung abgeben sollen und dabei eine Mindestspannung von 0,9 V/Zelle gewährleisten. Als Zinklegierung hat sich hierfür insbesondere eine Legierung bewährt, welche 250 ppm Wismut, 800 ppm Indium aber weniger als 30 ppm Blei enthält. Selbstverständlich sind auch andere Legierungen und Legierungsbereiche gut brauchbar.

Gegenstand der vorliegenden Erfindung sind somit nicht nur das Gemisch aus Metall- und/oder Legierungsteilchen und einem flüssigen elektrolytischen Medium, sondern auch das Verfahren zur Herstellung eines derartigen Gemisches, wobei das flüssige Metall oder die flüssige Legierung durch Versprühen oder Granulieren zu Teilchen verarbeitet werden, die ungleichmäßig geformt sind, eine ungleichmäßige Oberfläche aufweisen und eine Schüttdichte unter 33 Gew.-% der spezifischen Dichte des kompakten Metalls und/oder der kompakten Legierung aufweisen, gegebenenfalls nach Abtrennung von Überkorn und/oder Unterkorn in einen flüssigen Elektrolyten eingebracht werden, welcher gegebenenfalls ein Geliermittel enthält oder dem ein Geliermittel zugesetzt wird, wobei das Volumen des flüssigen Elektrolyten größer ist als es den Zwischenräumen zwischen den Metall- oder Legierungsteilchen bei trockener Schüttung entspricht.

Schließlich ist Gegenstand der Erfindung die Verwendung von ungleichmäßig geformten Metall- und/oder Legierungsteilchen, die eine ungleichmäßige Oberfläche aufweisen und eine Schüttdichte unter 33 Gew.-% der spezifischen Dichte des kompakten Metalls und/oder der kompakten Legierung aufweisen zur Herstellung von Gemischen mit einem flüssigen elektrolytischen Medium, bei denen das Volumen des Mediums größer ist als es den Zwischenräumen zwischen den Teilchen bei trockener Schüttung entspricht.

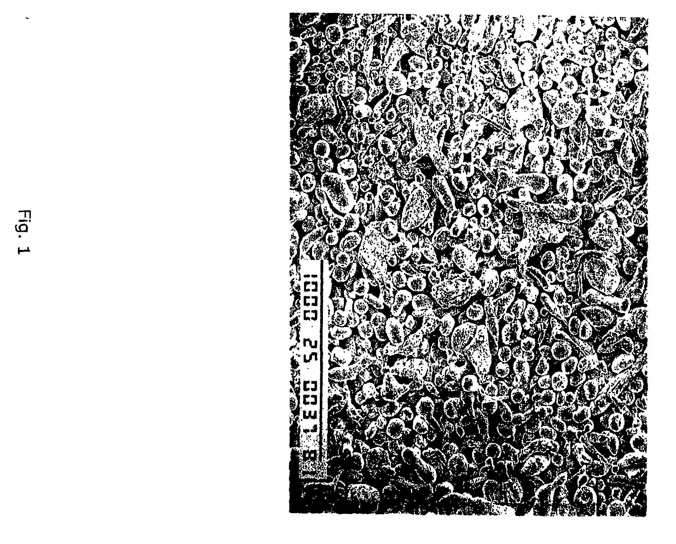

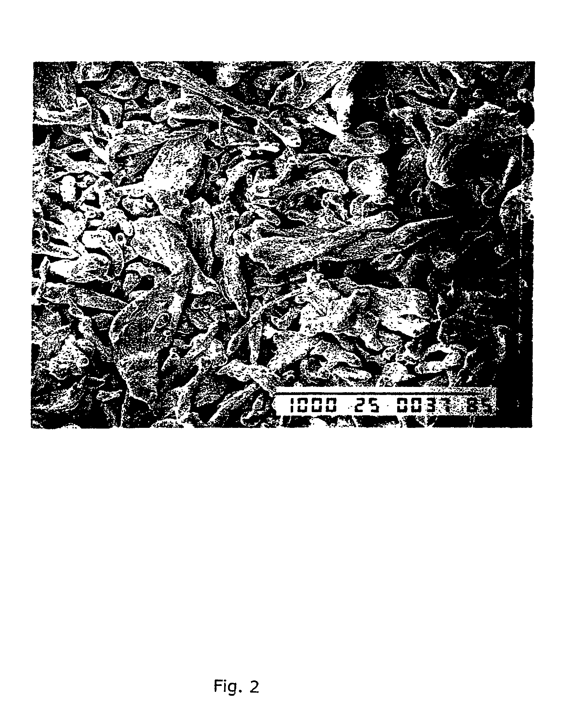

In den anliegenden Figuren 1 bis 4 sind verschiedene Legierungsteilchen auf Basis von Zink bei 50facher Vergrößerung abgebildet.

Figur 1 zeigt ein bisher übliches Produkt mit überwiegend rundlichen Teilchen und einem Schüttgewicht von 3,62 g/ml.

Die Figuren 2 bis 4 zeigen spratzige Produkte der gleichen Zinklegierung mit Schüttgewichten von 2,40 g/ml (Figur 2), 2,00 g/ml (Figur 3) und 1,85 g/ml (Figur 4).

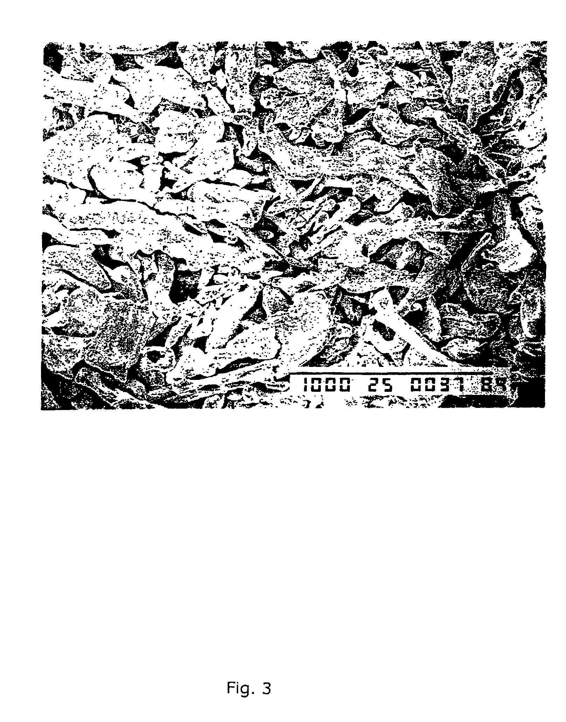

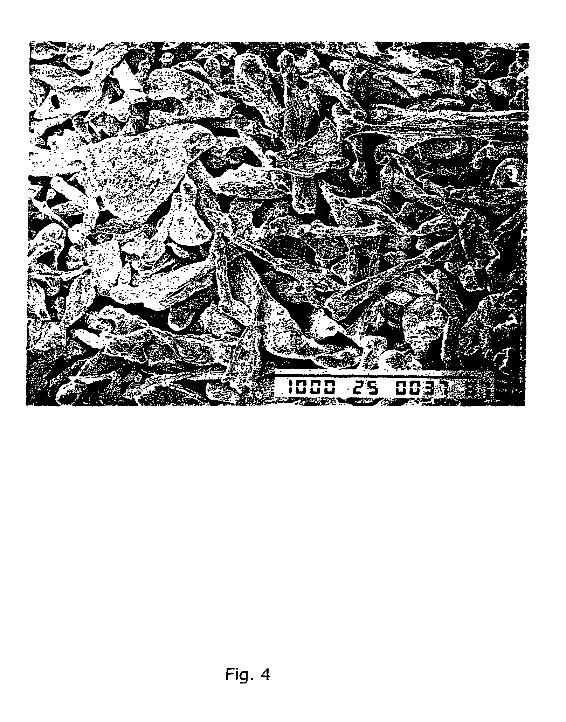

Die Produkte gemäß Figuren 3 und 4 zeigen optimale Ergebnisse, wenn sie zu einem Gemisch mit einem flüssigen elektrolytischen Medium verarbeitet werden, welche mehr flüssiges Medium enthalten als es den Zwischenräumen zwischen den Teilchen bei trockener Schüttung entspricht. Batterien aus solchen Gemischen haben optimale Ergebnisse bezüglich Leistung, Lebensdauer, Belastbarkeit durch starke Entladung und mechanische Stöße unter gleichzeitiger Vermeidung der Freisetzung von Gasen.

## Patentansprüche

1. Gemisch aus Metall- und/oder Legierungsteilchen und einem flüssigen elektrolytischen Medium, wobei die Metall- und/oder Legierungsteilchen ungleichmäßig geformt sind, eine ungleichmäßige Oberfläche aufweisen und eine Schüttdichte unter 33 Gew.-% der spezifischen Dichte des kompakten Metalls und/oder der kompakten Legierung aufweisen und das Volumen des Mediums größer ist als es den Zwischenräumen zwischen den Teilchen bei trockener Schüttung entspricht.

2. Gemisch gemäß Anspruch 1, **dadurch gekennzeichnet, dass** das Medium durch ein Geliermittel verfestigt ist.

3. Gemisch gemäß Anspruch 1 oder 2, **dadurch gekennzeichnet, dass** die Metall- und/oder Legierungsteilchen aus Zink und/oder einer Zinklegierung bestehen.

4. Gemisch gemäß Anspruch 3, **dadurch gekennzeichnet, dass** es weniger als 65 Gew.-%, vorzugsweise weniger als 62 Gew.-% Zink und/oder Zinklegierung enthält.

5. Verfahren zur Herstellung eines Gemisches aus Metall- und/oder Legierungsteilchen und einem flüssigen elektrolytischen Medium, wobei das flüssige Metall oder die flüssige Legierung durch Versprühen oder Granulieren zu Teilchen verarbeitet werden, die ungleichmäßig geformt sind, eine ungleichmäßige Oberfläche aufweisen und eine Schüttdichte unter 33 Gew.-% der spezifischen Dichte des kompakten Metalls und/oder der kompakten Legierung aufweisen, gegebenenfalls nach Abtrennung von Überkorn und/oder Unterkorn in einen flüssigen Elektrolyten eingebracht werden, welcher gegebenenfalls ein Geliermittel enthält oder dem ein Geliermittel zugesetzt wird, wobei das Volumen des flüssigen Elektrolyten größer ist als es den Zwischenräumen zwischen den Metall- oder Legierungsteilchen bei trockener Schüttung entspricht.

6. Verwendung von ungleichmäßig geformten Metall- und/oder Legierungsteilchen, die eine ungleichmäßige Oberfläche aufweisen und eine Schüttdichte unter 33 Gew.-% der spezifischen Dichte des kompakten Metalls und/oder der kompakten Legierung aufweisen zur Herstellung von Gemischen mit einem flüssigen elektrolytischen Medium, bei denen das Volumen des Mediums größer ist als es den Zwischenräumen zwischen den Teilchen bei trockener Schüttung entspricht.

## Claims

1. A mixture of metal and/or alloy particles and a liquid electrolytic medium, wherein the metal and/or alloy particles are irregularly shaped, have a non-uniform surface and a bulk density of below 33% by weight of the specific density of the compact metal and/or the compact alloy, and the volume of the medium is larger than that which corresponds to the spaces between the particles in a dry packing.

2. The mixture according to claim 1, **characterized in that** said medium is solidified by a gelling agent.

3. The mixture according to claim 1 or 2, **characterized in that** said metal and/or alloy particles consist of zinc and/or a zinc alloy.

4. The mixture according to claim 3, **characterized by** containing less than 65% by weight, preferably less than 62% by weight, of zinc and/or zinc alloy.

5. A process for preparing a mixture of metal and/or alloy particles and a liquid electrolytic medium, wherein the liquid metal or the liquid alloy is processed into particles by spraying or granulating which are irregularly shaped, have a non-uniform surface and a bulk density of below 33% by weight of the specific density of the compact metal and/or the compact alloy, and optionally after separating oversize and/or undersize, the particles are introduced into a liquid electrolyte which optionally contains a gelling agent or to which a gelling agent is added, the volume of the liquid electrolyte being larger than that which corresponds to the spaces between the metal or alloy particles in a dry packing.

6. Use of irregularly shaped metal and/or alloy particles which have a non-uniform surface and a bulk density of below 33% by weight of the specific density of the compact metal and/or the compact alloy, for the preparation of mixtures with a liquid electrolytic medium in which the volume of the medium is larger than that which corresponds to the spaces between the particles in a dry packing.

## Revendications

1. Mélange de particules de métal et/ou d'alliage et d'un milieu électrolytique liquide, dans lequel les particules de métal et/ou d'alliage ont des formes irrégulières, présentent une surface irrégulière et présentent une densité apparente inférieure à 33 % en poids de la densité spécifique du métal compact et/ou de l'alliage compact, et le volume du milieu est supérieur à celui correspondant aux espaces interstitiels entre les particules lors d'un déversement à sec.

2. Mélange selon la revendication 1, **caractérisé en ce que** le milieu est consolidé au moyen d'un gélifiant.

3. Mélange selon la revendication 1 ou 2, **caractérisé en ce que** les particules de métal et/ou d'alliage sont constituées de zinc et/ou d'un alliage de zinc.

4. Mélange selon la revendication 3, **caractérisé en ce qu'**il contient moins de 65 % de poids, de préférence moins de 62 % en poids, de zinc et/ou d'alliage de zinc.

5. Procédé de préparation d'un mélange de particules de métal et/ou d'alliage et d'un milieu électrolytique liquide, dans lequel on transforme le métal liquide ou l'alliage liquide, par pulvérisation ou par granulation, en particules qui ont des formes irrégulières, qui présentent une surface irrégulière et qui présentent une densité apparente inférieure à 33 % en poids de la densité spécifique du métal compact et/ou de l'alliage compact, le cas échéant après une séparation des grains trop gros et/ou des grains trop petits, on introduit les particules dans un électrolyte liquide qui, le cas échéant, contient un gélifiant, ou auquel on ajoute un gélifiant, le volume d'électrolyte liquide étant supérieur à celui correspondant aux espaces interstitiels entre les particules de métal ou d'alliage lors d'un déversement à sec.

6. Utilisation de particules de métal et/ou d'alliage de formes irrégulières, qui présentent une surface irrégulière et qui présentent une densité apparente inférieure à 33 % en poids de la densité spécifique du métal compact et/ou de l'alliage compact, pour la préparation de mélanges avec un milieu électrolytique liquide dans lesquels le volume du milieu est supérieur à celui correspondant aux espaces interstitiels entre les particules lors d'un déversement à sec.
